# EUROPEAN PATENT APPLICATION

(11) **EP 1 294 204 A1**
(43) Date of publication of application: **19.03.2003**
(21) Application number: 01307395.2
(22) Date of filing: 30.08.2001
(51) Int. Cl.: H04Q 7/24

(54) **Gateway emulating presence of mobile phone**

(71) Applicant: BRITISH TELECOMMUNICATIONS public limited company, London EC1A 7AJ (GB)
(72) Inventor: Usher, Martin Philip, Ruislip, Middlesex HA4 7PH (GB)
(74) Representative: Lidbetter, Timothy Guy Edwin

(57) **Abstract**

Text message calls, addressed to a predetermined cellular telecommunications directory number, are routed over a cellular telecommunications network to a service application 15. Routing data associated with the directory number is stored by the network in order to emulate the presence of a cellular communications device, such that calls addressed to the directory number are correctly routed to the service application. A "virtual" location register 66 contains virtual mobile device data and virtual network infrastructure data, to enable a standard interface 61 to request and respond to requests for this data as if a real cellular device were present. A virtual mobile gateway 27 provides the required virtual network and virtual mobile device data to populate the virtual location register 66, and to route the signalling and data traffic over an interface 68 to a gateway application 64 serving the required application 15.

## Description

This invention relates to telecommunications systems, and in particular to a gateway system for facilitating the transmission of text messages from a terminal operating in one network, to a termination operating in a different network.

The features of the "GSM" standard for mobile telephony include the SMS (Short Message Service) text messaging service. This allows text messages and binary data such asd logos and tunes to be transmitted from one terminal device to another. Although primarily intended to allow messages to be sent between mobile devices, it is also possible to transmit such messages to or from other termination points provided the terminal equipment is equipped to process the message. For example, the voice mail (call answering) facility of a cellular telephone operator may be equipped to transmit a text message to a mobile device to alert its user that a voice message for the user has been received.

Similarly, data can be sent from mobile devices to terminations other than mobile devices, such as applications platforms, attached to the mobile network. Such a facility may be used, for example, to request that the platform transmits an alert message when some event monitored by the application platform occurs, such as a share price passing a given threshold, significant events in a sporting fixture (such as the scoring of a goal), or travel information such as congestion on a proposed route or the imminent arrival of a service that the user wishes to meet.

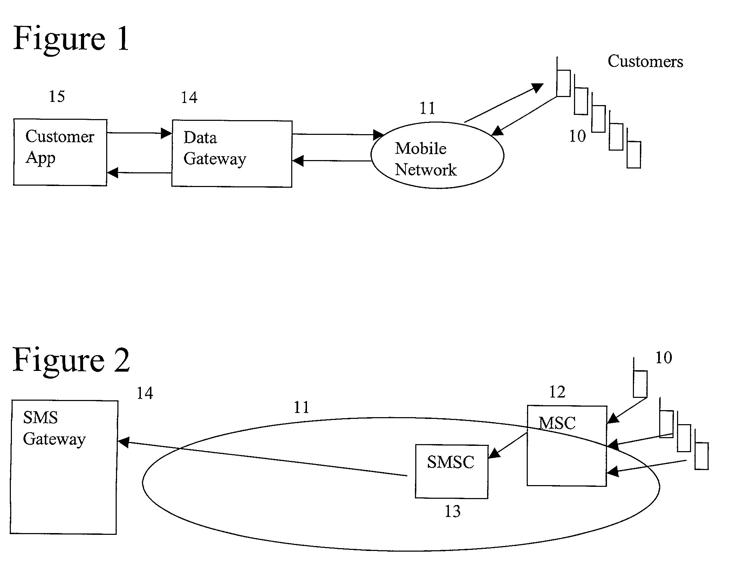

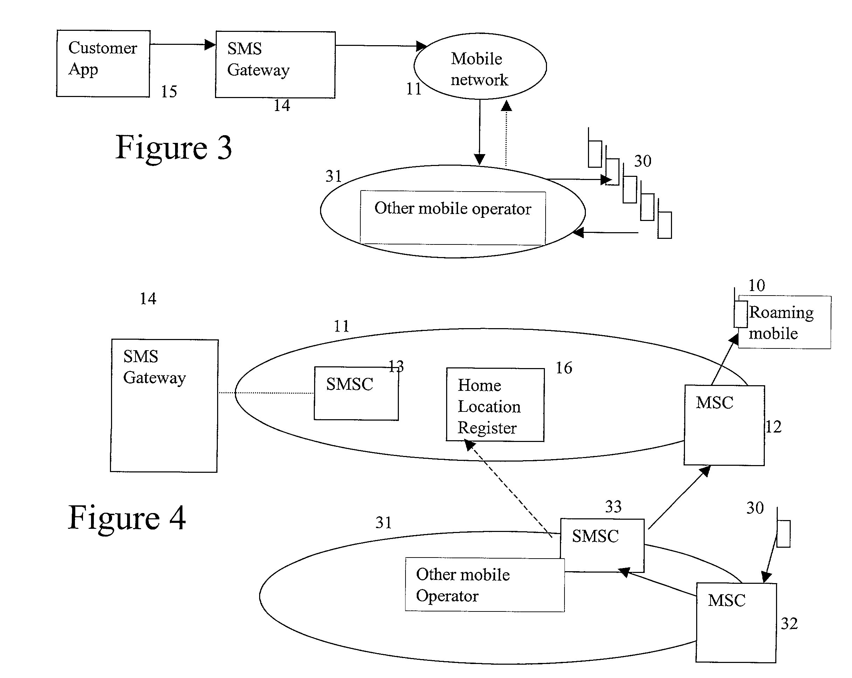

The standard text messaging process to an application platform, can be illustrated with reference to Figures 1 and 2. When a mobile device 10 transmits a text message, the message is addressed to a telephone number associated with a gateway 14 which converts the data into a form suitable for the application platform 15. The number is dialled by the user of the mobile device 10. The mobile network 11 can then route text messages from the mobile device to the application. The process performed by the network is described in more detail with reference to Figure 2. As shown in Figure 2, a cellular network 11 transmits text data from mobile devices 10 by way of a GSM switch (MSC) 12 to the SMS data switch [SMSC] 13 of the mobile network serving the mobile device 10. Note that the GSM switch 12 does not transmit the message direct to the destination 14. The SMSC 13 has its own directory number (MSISDN), normally preset in the mobile device 10, and it this number to which all text messages from the mobile device 10 are sent. The directory number used to identify the intended recipient of the message is included with the text message and is used by the SMSC 13 to identify the onward routing required. The SMSC 13 routes the SMS data for the destination directory number to the appropriate termination. This is normally another mobile device 10, accessed by way of its currently serving MSC 12 as identified by consulting the Home Location Register 16 associated with the directory number (see Figure 4). However, if the SMSC 13 recognises that the directory number in fact corresponds to a SMS gateway 14, and not to a mobile device, it routes it to that gateway 14. In this case no attempt is made to route the SMS data to a GSM device.

Figures 3 and 4 illustrate the situation when the mobile device 30 and application 15 are not served by the same network. It should be apparent that the application 15 and gateway 14 can transmit text messages to the conventional mobile handsets 10, 30 both of its own and other networks 11, 31 by way of the SMSC 13 in its own network. The SMSC 13 in the originating network will handle the text message as it would any other, using the directory number of the destination terminal 10, 30 to identify the destination user's home network and retrieving the user's present location from the Home Location Register in the home network.

However, the transmission of text messages in the reverse direction, to the gateway 14 from a user of another network 31, is not so straightforward. If a short code is used, the mobile network 31 currently serving the device 30 may not recognise the code and will therefore not be able to route messages to the gateway 14 and application 15. The call may either fail, or be routed to an application using the same code on the user's own network 31. This makes it difficult to provide such services to users 30 of networks other than the network 11 with which the application 15 is associated.

A variation of this method is to use a normal MSISDN (mobile directory number) instead of a short code. This has the advantage of being unique and identifiable across all GSM networks. The SMSC 13 can be programmed to translate certain MSISDNs as relating to applications platforms 14. Interconnect agreements exist between mobile networks to allow SMS data to be sent between mobile devices 30 operating on one network 31 and gateway/applications 14/15 connected to a different network 11. However, there are still problems associated with this method if the mobile device 31, and therefore the SMSC 33 serving it, are part of a network 31 other than the network 11 for which the text message is destined. In this case the SMSC 33 will not recognise the special status of the directory number and will handle the message as a standard mobile-to- mobile text message instead of translating it as the SMSCs 13 in the host network would. In this situation, when the mobile device 30 transmits text data to the SMSC 33 of its currently serving network 31, the SMSC 33 uses the GSM standard signalling protocols to request the location of the destination mobile device 10 from the HLR (Home Location Register) 16 associated with the directory number, as it would for any mobile device located on a different mobile network, so that it can route the text message to the correct MSC 12. If no actual mobile device 10 is present on the network, the text data message will fail or expire on the SMSC 33 of the network 31 from which the text message was to have been sent. The SMSCs 13, 33 of the two operators have no direct connection with each other, and therefore the number translation facility of the SMSC 13 in the host network is not invoked.

If a mobile device 10 having the required directory number exists on the destination network 11 used by the SMS gateway 14, then, when the mobile device 30 sends its message to its home network's SMSC 33, via the MSC 32 to which it is attached, the SMSC 33 signals to the destination network's HLR 16 to obtain the whereabouts of the mobile device 10 having the required directory number. It then sends the message directly to the MSC 12 on which the mobile device is located and the SMS data is delivered to the mobile device 10. It would be possible (using a data lead) to connect a mobile device 10 to a computer and route the text messages to the SMS gateway 14 thereby. However, this method has the disadvantage of being slow (only one message every 4-10 seconds) as it is limited by the capacity of the GSM base station and radio interface. Also, this method requires a different mobile device 10 to be provided for every directory number offered by the application platform.

A similar problem arises with some other services. For example, the number that a mobile unit uses for a WAP (wireless internet) connection is normally pre-set as a short code. This code is normally only recognised by the host network and means that the device is unable to connect WAP calls when the user is using a network other than his own ("roaming").

According to a first aspect of the present invention, there is provided a gateway system for emulating the presence of a operative mobile telecommunications device, comprising means for receiving incoming call attempts from a cellular telecommunications network directed to a specified cellular telecommunications directory number, means for indicating to the cellular telecommunications network that calls to the said directory number are being accepted, means for receiving a call in response to said attampt and forwarding the call to a network application.

According to a second aspect, there is provided a method for routing telecommunications calls, addressed to a predetermined cellular telecommunications directory number, over a cellular telecommunications network to a service application, wherein routing data associated with the directory number is stored in order to emulate the presence of a cellular communications device, such that calls addressed to the directory number are routed to the service application.

As already indicated the system is suitable for handling and forwarding data calls, particularly text message calls according to the SMS system, although data transmission (for example over the WAP internet protocol) is also within the scope of the invention.

Preferably the gateway comprises means for emulating a cellular radio base station with which a cellular telecommunications device having the said directory number is in communication. It may further comprise a location register, arranged to store location information indicating that the said directory number is associated with the emulated radio base station. To avoid signalling congestion the location register may comprise means for automatically generating a predetermined response to location requests in respect of the said directory number without attempting to make contact with a device having the said directory number. In a preferred arrangement the gateway system also comprises means for connecting a plurality of signalling and data calls to the same directory number simultaneously.

In one arrangement the location register may form part of a cellular switching centre associated with the gateway system. In an alternative arrangement the gateway system may comprise means for emulating a cellular switching centre communicating with the emulated base station.

The gateway allows emulation of a "virtual" mobile unit as a destination for text messages, without the need for a connection to a real mobile handset, with its attendant bandwidth limitations, to be set up. This allows text messages to be sent from one network to another without any requirement for the originating network to have information as to which directory numbers relate to real mobile terminals and which to gateways.

Embodiments of the invention will now be described, with reference to the drawings, in which:
Figure 1 illustrates schematically the various elements which co-operate in the prior art transmission of text messages between mobile handsets and a customer application operating with the same network.
Figure 2 illustrates schematically the network elements in more detail
Figure 3 illustrates schematically the various elements which co-operate in the prior art transmission of text messages between mobile handsets and a customer application operating with different networks
Figure 4 illustrates schematically the network elements in more detail.
Figure 5 is a view equivalent to Figure 4, showing the additional elements used in the invention.
Figures 6 and 7 show two embodiments of the virtual gateway of Figure 5 in more detail.

The embodiments are described with reference to SMS text messaging, but as referred to above, similar provision may be made for internet access (WAP) and other applications.

Figures 1 to 4 have already been discussed.

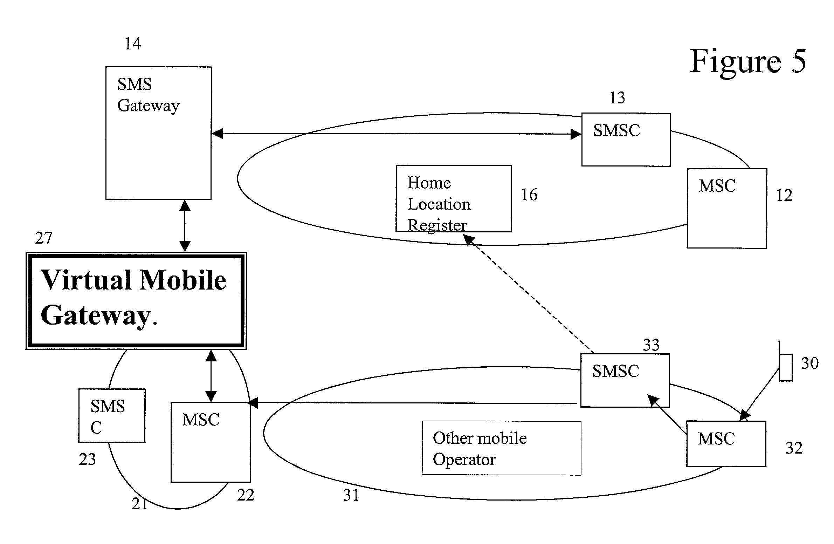

As shown in Figure 5, a "virtual" gateway 27 is associated with the customer gateway 14 and application 15. The gateway 27 is associated with an MSC 22 on a host network 21 (shown as separate from the home network 11, but not necessarily so) and is arranged such that, to the rest of the network 21, the gateway 27 appears to be a conventional MSC 22 serving a mobile handset. In this respect the gateway has some similarities to the interface units disclosed in the International Patent Applications filed by the present applicant and published as WO01/15337, WO01/15338, WO01/15466, WO01/20812, WO01/20813, WO01/33886 and WOO1/41317, in that it emulates the presence of a virtual mobile telephone. However, in the prior art arrangements the interface unit indicate that the mobile telephone is in a "busy" or "switched off" operating state and generates a call divert instruction to allow a call to be connected to the divert number (which is a satellite connection). The interface unit is therefore merely acting to set up a call diversion. The diversion instructions for individual mobile units are activated and deactivated relatively frequently according whether the user of the mobile handset can be reached over the cellular network or only by the satellite connection.

The interface 27 of the present embodiments also emulates the presence of a mobile telephone, but responds to incoming calls by connecting the call to the required application. Moreover, as the directory numbers are substantially permanently associated with the interface, the location update process can be simplified, as will be described.

As the gateway 27 emulates a conventional MSC 22, text messages can thus be routed from any real mobile handset 30 to the MSC provided that they are addressed to a mobile unit that appears to be connected to the gateway 27. However, the interface between the associated MSC 22 and the gateway 27 is not a standard MSC/handset interface (using a base site controller and radio interface), but instead is arranged to handle multiple calls to a single MSISDN at a higher bit rate than that at which the standard radio interface could operate. The network location of this gateway 27 (that is to say, the identity of the MSC 22 through which it is to be contacted) is stored against a standard MSISDN directory number in a Home Location Register 16, which may be in the host network 21 or (as shown) in some other network 11.

When a mobile handset 30 transmits a text message, it sends the message to its own network's SMSC 33 (via its MSC 32). The SMSC 33 uses the GSM standard signalling to request, from the HLR 16 associated with the directory number, the location of the destination terminal, as it would for a real mobile device located on the destination mobile network 11. Thus far the process is the same as for the prior art arrangements previously discussed with reference to Figures 3 and 4. The originating network 31 does not require any information as to which directory numbers relate to real mobile terminals and which to gateways.

If the directory number in question is emulated on the Virtual Mobile Gateway 27, the address stored in the HLR 16 is that of the MSC 22 to which the Virtual Mobile Gateway is attached. The SMSC 33 in the originating network will therefore send the SMS data to the MSC 22 in the destination network. Note this MSC 22 could be on the same network 31 that the originating SMS Gateway 33 is directly connected to, or on any other Mobile Network/Virtual Mobile Network 11 having interconnect agreements with the originating Network 31. It need not form part of the network 11 with which the MSISDN (and hence the HLR 16) is associated.

The Gateway 27 includes a gateway application platform 64 which interfaces the virtual cellular elements 62, 63, 65, 66 with the applications 14, 15, 19 to which the text message is to be transmitted. The gateway application platform 64 passes the SMS data to the SMS gateway/application 14. Data can be received/sent as fast as the MSC 22 can switch them. It can therefore handle text calls from a large number of handsets simultaneously.

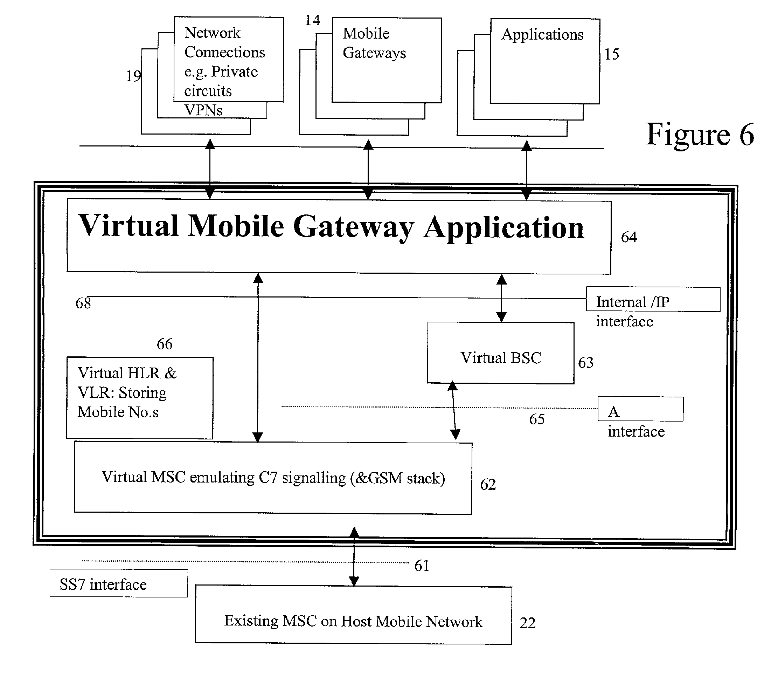

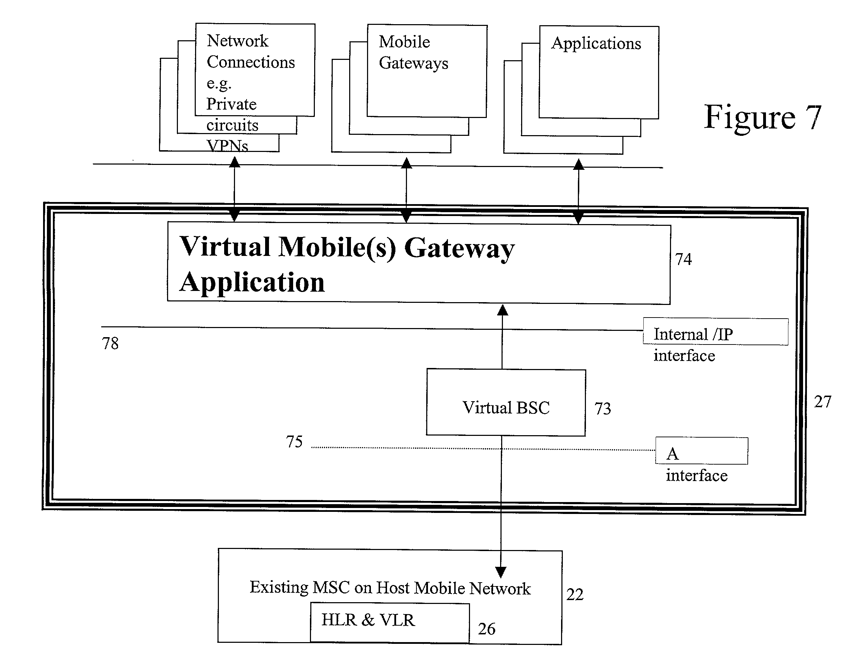

Two embodiments for the Virtual Mobile Gateway 27 are shown, in Figures 6 and 7 respectively. The embodiment of Figure 6 allows the serving MSC 22 to operate conventionally, whilst the simpler embodiment of Figure 7 requires some modification to the operation of the serving MSC 22.

In the embodiment of Figure 6 the gateway 27 interfaces to the host MSC 22 by appearing as another MSC 62, with its own Home and Visitor Location Registers 66. The virtual MSC communicates with the host MSC 22 via a C7 link incorporating a GSM signalling stack, and with the gateway application platform 64 communicating with the destination applications by a internal interface 68. In the embodiment of Figure 7 the gateway 27 interfaces with the host MSC 22 by appearing as a base station switch 63 via an "A interface" 65 incorporating the appropriate GSM signalling stack. This requires the host network 21 to connect direct to the "A interface" 75. This could require the use of the host's HLR/VLR 26, depending on its location in the GSM network.

The virtual mobile gateway 27 interfaces with the MSC 22 on the host network 21 by emulating another MSC 62 (Figure 6) or a base station switch (BSC) 73 (Figure 7). In either case, the gateway 27 communicates with the host MSC 22 to allow communications with other GSM networks 11, 31 in such a way that it appears that a mobile device is present having the directory number associated with the text application, communicating by way of a radio interface, base station, base station switch 63,73 and, in the embodiment of Figure 6, an MSC 62.

In the arrangement of Figure 6, the virtual MSC interface 62 uses a SS7 signalling interface 61 to communicate with other MSCs 22, 32 and SMSCs 33, to initiate and terminate signalling and data traffic. This communication includes functions such as requesting information from HLRs 16, responding to requests from external MSCs 12,32 and SMSCs 13, 33 for information from the virtual HLR/VLR 66, and controlling and routing data traffic over data channels of the switching interface. The virtual HLR/VLR 66 contains virtual mobile device data and virtual network infrastructure data, to enable the SS7 interface to request and respond to requests for HLR/VLR data. The virtual mobile gateway 27 provides the required virtual network and virtual mobile device data to populate the virtual HLR/VLR 66, and to route the signalling and data traffic over an interface 68 to a gateway application 64 serving the required gateway 14, application 15 or other network 19.

The arrangement of Figure 7 is similar to that of Figure 6, but the interface is a "virtual BSC" 73 using the "A interface" 75 to communicate, via the host MSC 22, with external MSCs 12, 32 and SMSCs 13, 33, to initiate and terminate signalling and data traffic. This communication will include but is not limited to, requesting information from HLR/VLRs, controlling and routing data traffic over data channels of the switching interface, simulating the presence of mobiles (IMSI attach, IMSI detach, periodic logons and responding to paging requests etc.) .

In this arrangement the host HLR/VLR 26 associated with the host MSC 22 contains the virtual mobile device data and virtual network infrastructure data, to enable the Host MSC 22 to request and respond to requests for HLR/VLR data. The virtual mobile gateway 27 provides the required virtual network and virtual mobile device data to populate the Host HLR/VLR 26, and routes the signalling and data traffic over an interface 78 to a gateway application 74 serving the required gateway 14, application 15 or other network 19.

Both of the above arrangements enable data to be routed to and from real mobile devices 10, 30, on any GSM compatible network, (or other virtual mobile devices) and also enable the initiation and capture of signalling data to provide information which can include the identity, location and state of mobile devices on any GSM compatible network.

In situations of high volumes (numbers of calls) to a directory number which appears to belong to a mobile unit roaming on the host network 21, the capacity of the system (and external mobile network) could be affected by the number of queries to the HLR 16 of the number's home network 11. This could reduce the call rate to the gateway 27 and is outside the control of the gateway system 27 itself. This problem can be avoided by using directory numbers which have the virtual HLR 66 in the virtual gateway 27 as their home location register. All location requests would then be routed to the gateway 27 (as the address of the virtual HLR 66), by way of one or more signalling channels. The virtual mobile unit is always served by the same virtual network and therefore no location update is required before responding to a location request. The gateway 27 is arranged to always respond to requests for the location of the virtual mobile device having the specified directory number with the same information, indicating the virtual mobile device is served by the virtual base station 63 on the virtual network and is available to receive data.

The number of signalling and traffic channels to the virtual MSC/HLR can be expanded to meet signalling demand so that more than one call to the directory number can be handled at once. The virtual MSC 62 can be configured to act in a non-blocking mode, that is to say it would not give a "busy" tone in respect of a directory number unless the switch 62 itself has reached full capacity.

Although to another MSC 12, 32 the gateway 27 appears to be an MSC 62 serving an HLR 66, the gateway 27 can therefore be arranged to give a prompt connection in response to any location request.

In order for customers to use the "reply function" on their mobile phones, it would be necessary to generate the appropriate directory number for transmission as part of such outgoing data. For SMS data this means that an SMSC must generate the number. This SMSC may be part of the virtual gateway 27, forming part of the host network 21, or it may be an SMSC on any other GSM network to which the application is connected and with which it has an agreement to generate the directory number.

The operation of these embodiments will now be described. In order to make it appear that a given mobile unit is connected to the virtual base station 63, 73, its details must be entered in the appropriate VLR/HLR 66, 26. This step is similar to the data acquisition process performed in the prior art references referred to above. Firstly, an application 15 attached to the Virtual Mobile Gateway 64, 74 generates the directory number for a mobile it wishes to be emulated. If the GSM identity (IMSI) of the mobile device is not already known to the gateway application platform 64,74, it obtains the IMSI by sending the GSM signalling request SRI (send routing information) to the mobile device's home location register, which for the sake of example will be assumed to be the HLR 16 of the network 11. The HLR 16 will then return (among other data) the IMSI for the directory number. (This process is described in detail in International Patent Specification WOO1/33886)

To make the virtual mobile unit appear to be attached to the virtual MSC 62 the Gateway application platform 64, 74 then simulates an IMSI attach, either by signalling to the mobile's HLR 16 that the device resides on the virtual MSC 62 and populating the virtual VLR 66 with the responding data or (in the case of the virtual BSC interface of Figure 7), signalling an IMSI attach to the host MSC 22 and allowing it to signal to the mobile device's HLR 16 and populating the host VLR 26.

If the virtual mobile device belongs to the virtual mobile network, the data is obtained from the virtual HLR 66 (Figure 6) or Host HLR 26 (Figure 7), but all other aspects remain the same except that the virtual gateway application platform 64, 74 is be capable of handling a plurality of data calls, as previously described.

Once the virtual mobile device is attached, any call from any network (fixed or mobile) to the virtual mobile's directory number will cause the GSM network 11, 21, 31 to access the device's HLR 16 to obtain the location of the virtual mobile device. The HLR 16 provides the routing information to the virtual MSC 62 (Figure 6) or Host MSC 22 (Figure 7) and data traffic will then be routed to it. The Virtual Mobile Gateway application platform 64,74 will then route the data to the appropriate application 15.

Once the virtual mobile device is attached, any data message that the application 15 requires to be transmitted to a mobile device 30 is first transmitted to the Virtual Mobile Gateway application platform 64,74. The Gateway application platform 64, 74 routes the message to the virtual MSC 62 (Figure 6) or Host MSC 22 (Figure 7) which checks the virtual/host VLR/HLR 66/26 for the identity of the SMSC 33 to which the SMS data is to be routed. The virtual/Host MSC 62/22 then passes the SMS data to the appropriate SMSC 33 for delivering in the normal way.

The invention also has a number of further uses. For example a virtual mobile gateway number can be used as a WAP connection number, to allow access to the internet when a user is "roaming" (not on his home network). This would provide connectivity to and from any GSM network with which there was an inter-connect agreement.

Location, status and identity information is often required for access to some websites. This information is often not released or access to it is costly or difficult via the mobile operators. The signalling ability of the virtual mobile gateway provides simple access to this type of information from all GSM networks.

## Claims

1. A gateway system for emulating the presence of a operative mobile telecommunications device, comprising means for receiving incoming call attempts from a cellular telecommunications network directed to a specified cellular telecommunications directory number, means for indicating to the cellular telecommunications network that calls to the said directory number are being accepted, and means for receiving a call in response to said attampt and forwarding the call to a network application.

2. A gateway system according to claim 1, arranged to handle and forward data calls.

3. A gateway system according to claim 2, arranged to handle and forward text message calls.

4. A gateway system according to any preceding claim, comprising means for emulating a cellular radio base station with which a cellular telecommunications device having the said directory number is in communication.

5. A gateway system according to claim 4, further comprising a location register, arranged to store location information indicating that the said directory number is associated with the emulated radio base station.

6. A gateway system according to claim 5, wherein the location register comprises means for automatically generating a predetermined response to location requests in respect of the said directory number without attempting to make contact with a device having the said directory number.

7. A gateway system according to claim 6, comprising means for connecting a plurality of calls to the same directory number simultaneously.

8. A gateway system according to any of claims 5 to 7, wherein the location register forms part of a cellular switching centre associated with the gateway system.

9. A gateway system according to any of claims 5 to 7, comprising means for emulating a cellular switching centre communicating with the emulated base sattaion and with which the location register is associated.

10. A method for routing telecommunications calls, addressed to a predetermined cellular telecommunications directory number, over a cellular telecommunications network to a service application, wherein routing data associated with the directory number is stored in order to emulate the presence of a cellular communications device, such that calls addressed to the directory number are routed to the service application.

11. A method according to claim 10, arranged to handle and forward data calls.

12. A method according to claim 11, arranged to handle and forward text message calls.

13. A method according to claim 10, 11 or 12, in which a cellular radio base station is emulated with which the cellular telecommunications device having the said directory number is in communication.

14. A method according to claim 13, wherein a location register stores location information indicating that the said directory number is associated with the emulated radio base station.

15. A method according to claim 14, wherein the location register automatically generates a predetermined response to location requests in respect of the said directory number without attempting to make contact with a device having the said directory number.

16. A method according to claim 15, with provision for simultaneous connection of a plurality of calls to the same directory number.

17. A method according to any of claims 14, 15 or 16, wherein the location register forms part of a cellular switching centre.

18. A method according to any of claims 14, 15 or 16, wherein a cellular switching centre station, with which the location register is associated, is emulated communicating with the emulated base station.
